# EUROPEAN PATENT APPLICATION

(11) **EP 3 576 187 A1**
(43) Date of publication of application: **04.12.2019**
(21) Application number: 18745326.1
(22) Date of filing: 26.01.2018
(51) Int. Cl.: H01M 4/02, H01M 4/04, H01M 4/62, H01M 4/13, H01M 4/139

(54) **ELECTRODE COMPOSITION, ELECTRODE, PRODUCTION METHOD FOR SAID ELECTRODE, AND BATTERY**

(30) Priority: 30.01.2017 JP 2017014066
(71) Applicant: Tokyo Metropolitan University, Tokyo 163-0926 (JP); 3Dom Inc., Yokohama-shi, Kanagawa 2210022 (JP)
(72) Inventor: KANAMURA Kiyoshi, Hachioji-shi Tokyo 192-0397 (JP); MUNAKATA Hirokazu, Hachioji-shi Tokyo 192-0397 (JP); SHOJI Mao, Hachioji-shi Tokyo 192-0397 (JP)
(74) Representative: Vossius & Partner Patentanwälte Rechtsanwälte mbB
(86) International application number: PCT/JP2018/002476
(87) International publication number: WO 2018/139580

(57) **Abstract**

[Problem] To provide an electrode which can sufficiently exhibit the battery characteristics necessary for a solid-state battery, a production method therefor, an electrode composition for producing said electrode, and a battery using the electrode. [Solution] An electrode composition for secondary cells which is characterized by including an active material, a binder, and an ion-conductive material, the ion-conductive material being a solvated ion conductive material or ion-conductive solution provided with a metal ion compound; an electrode which is characterized by being provided with an active material, a conductive aid, and a composite material obtained by combining a binder and an ion-conductive material; and an electrode production method using the electrode composition, the electrode production method being characterized by involving a first mixing step for obtaining a first mixture by mixing an active material and a binder, and a second mixing step for obtaining a second mixture by adding and mixing an ion-conductive material to the first mixture.

## Description

### [Technical Field]

The present invention relates to an electrode composition, an electrode, a production method thereof, and a battery. More particularly, the present invention relates to an electrode having good electrochemical characteristics, and suitable as an electrode of an all-solid-state battery, and relates to a method for producing the electrode, to an electrode composition, and to a battery in which the electrode is utilized.

### [Background Art]

Secondary batteries such as lithium secondary batteries, which boast long life, high efficiency, and high capacity, are utilized as power sources in mobile phones, notebook computers, digital cameras, and the like. All-solid-state batteries, in which an electrolyte is also solid, have been the object of ongoing development in recent years, for example from the viewpoint of safety, and accordingly, electrodes suitable for all-solid-state battery have also been developed.

For example, PTL 1 proposes an electrode sheet capable of achieving a large area and reduction in film thickness while suppressing breakoff of an electrode material and surface cracking, and having excellent ion conductivity. This electrode sheet is provided with: a sheet-shaped porous base material, an adhesive, and an electrode material. The adhesive adheres at least to the surface of a skeleton portion that surrounds voids of the porous base material. The electrode material contains a solid electrolyte material and an electrode active material, and fills up the interior of the voids of the porous base material.

PTL 2 proposes an electrode material having high conductivity. For producing this electrode material, in order to reduce internal resistance in a battery and to improve input-output characteristics, an active material and a metal source compound are mixed and dispersed to cause chemical reactions such as thermal decomposition, gas-phase reduction, liquid-phase reduction, or a combination thereof. As a result, an electrode material in which metal particles precipitate on the surface of the active material is obtained.

PTL 3 proposes an all-solid-state lithium secondary battery that utilizes a polymer solid electrolyte. To improve cycle life by suppressing increase in battery resistance with time, improve discharge load characteristics by carrying out reduction of inner resistance simultaneously, and improve reliability of the battery in the all solid lithium secondary battery using a polymer solid electrolyte, a solid electrolyte powder is added to an electrode constituent material such as an active material, a conductive aid, the polymer solid electrolyte and a binder, and the ratio of the polymer solid electrolyte and the inorganic solid electrolyte powder to an electrode mixture is made less than 50% by volume fraction.

### [Citation List]

### [Patent Literature]

[PTL 1] Japanese Patent Application Publication No. 2015-153459
[PTL 2] Japanese Patent Application Publication No. 2010-244727
[PTL 3] Japanese Patent Application Publication No. 2009-94029

### [Summary of Invention]

### [Technical Problem]

However, the above-described conventional electrodes still has difficulty in forming good ion conduction paths, and in sufficiently exhibiting battery characteristics to the extent as required for all-solid-state batteries.

It is therefore an object of the present invention to provide an electrode that allows forming good ion conduction paths and that allows battery characteristics to be sufficiently brought about, as required for all-solid-state batteries, and to provide a production method of the electrode, an electrode composition for producing the electrode, and a battery in which the electrode is used.

### [Solution to Problem]

As a result of intensive studies made by the present inventors with a view to solving the above problem, the present inventors have found that the problems can be solved by using a specific ionic liquid, and have completed the present invention by further working on that finding.

Specifically, the present invention provides each of the following inventions.
1. An electrode composition for a secondary battery, containing:
   an active material, a binder, and an ion-conductive material,
   wherein the ion-conductive material is a solvated ion-conductive material or an ion-conductive solution containing a metal ion compound.
2. The electrode composition for the secondary battery according to 1,
   wherein a mixing ratio of the ion-conductive material with respect to the active material is active material:ion-conductive material = 1:0.01 to 1:0.3 in terms of weight ratio.
3. An electrode containing an active material, a conductive aid, and a composite material resulting from compositing a binder and an ion-conductive material.
4. The electrode according to 3, wherein the composite material is present over the entirety of a thickness direction of the electrode, in a state of being mixed with the active material and the conductive aid.
5. A method for producing an electrode using the electrode composition of 1, the method including:
   a first mixing step of mixing an active material and a binder, to obtain a first mixture; and
   a second mixing step of adding an ion-conductive material to the first mixture, and mixing, to obtain a second mixture.
6. A battery, provided with the electrode of 3 or 4 as at least one of a positive electrode and a negative electrode.

### [Advantageous Effects of Invention]

The electrode of the present invention allows good ion conduction paths to be formed and battery characteristics to be sufficiently brought about as required for all-solid-state batteries. The electrode of the present invention is significantly advantageous also in manufacturing terms, since an electrode layer can be formed on a solid electrolyte by using conventional coating technologies.

The method for producing the electrode of the present invention enables simple and convenient production of the electrode of the present invention. In particular, conventional electrode production technologies can be applied to the method of the present invention, which allows mass production through effective use of established mass-production technologies. In addition, unlikely in the conventional arts, the production method of the present invention is free from the problems such as the difficulty in producing electrodes having a practical thickness, the need for a high-temperature thermal treatment, or the need for steps such as mechanical milling or ultrasonic agitation. Therefore, the manufacturing process in the production method of the invention is convenient and highly practical.

The electrode composition of the present invention allows to obtain the electrode of the present invention, and the battery of the present invention utilizes the electrode of the present invention described above, and accordingly exhibits good battery characteristics.

### [Brief Description of Drawings]

[Fig. 1]

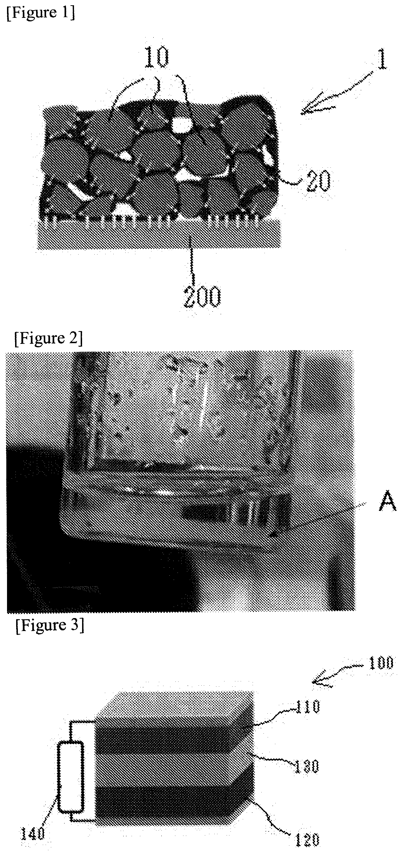

   Fig. 1 is a schematic diagram schematically illustrating the internal structure of an electrode of the present invention.
[Fig. 2]
   Fig. 2 is a photograph (photograph substituting for a drawing) illustrating a composite state of a composite material in an electrode of the present invention.
[Fig. 3]
   Fig. 3 is an internal perspective side-view diagram schematically illustrating one embodiment of a battery of the present invention.
[Fig. 4]

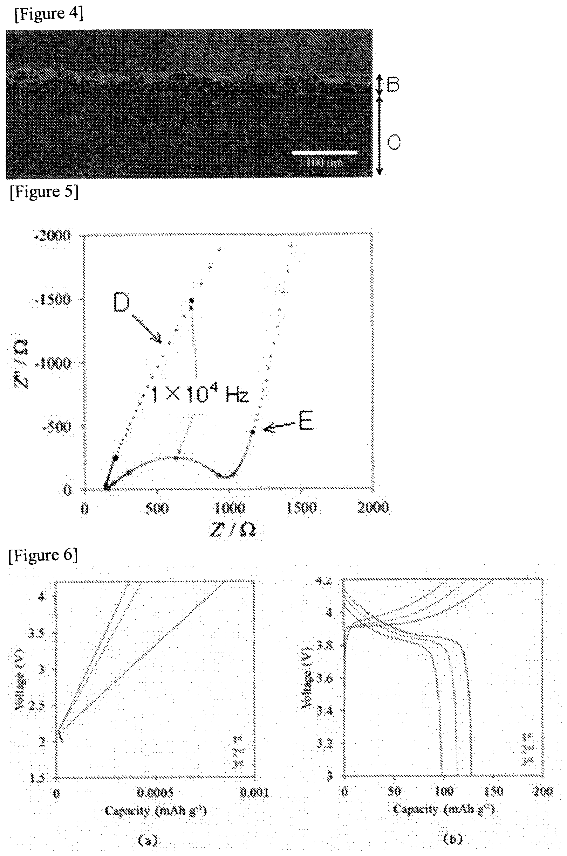

   Fig. 4 is a cross-sectional SEM photograph illustrating an electrode obtained in a working example.
[Fig. 5]
   Fig. 5 is a chart illustrating impedance measurement results.
[Fig. 6]
   Fig. 6 is a set of charts illustrating charge/discharge measurement results, where Fig. 6(a) is a chart of a comparison target example, and Fig. 6(b) is a chart of a product of the present invention.
[Fig. 7]

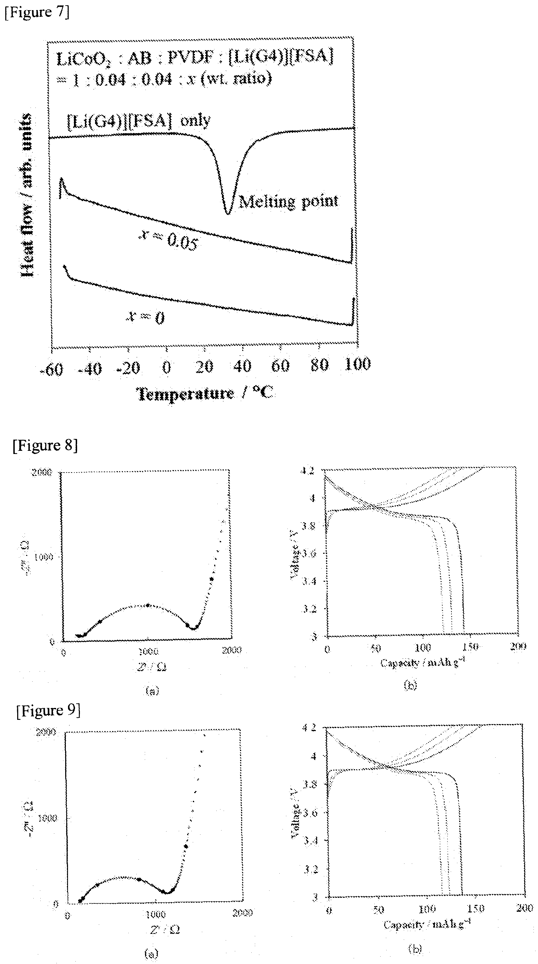

   Fig. 7 is a DSC chart of an electrode obtained in Working example 1.
[Fig. 8]
   Fig. 8(a) is a chart illustrating measurement results of impedance of an electrode obtained in Working example 2, and
   Fig. 8(b) is a chart illustrating charge/discharge measurement results.
[Fig. 9]
   Fig. 9(a) is a chart illustrating measurement results of impedance of an electrode obtained in Working example 3, and
   Fig. 9(b) is a chart illustrating charge/discharge measurement results.
[Fig. 10]

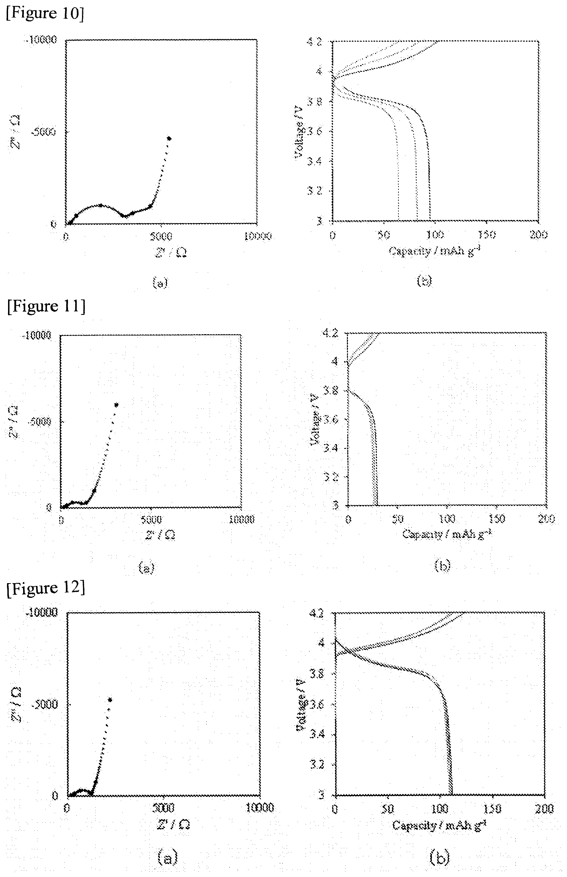

   Fig. 10(a) is a chart illustrating measurement results of impedance of an electrode obtained in Working example 4, and
   Fig. 10(b) is a chart illustrating charge/discharge measurement results.
[Fig. 11]
   Fig. 11(a) is a chart illustrating measurement results of impedance of an electrode obtained in Working example 5, and
   Fig. 11(b) is a chart illustrating charge/discharge measurement results.
[Fig. 12]
   Fig. 12(a) is a chart illustrating measurement results of impedance of an electrode obtained in Working example 5, and
   Fig. 12(b) is a chart illustrating charge/discharge measurement results.
[Fig. 13]

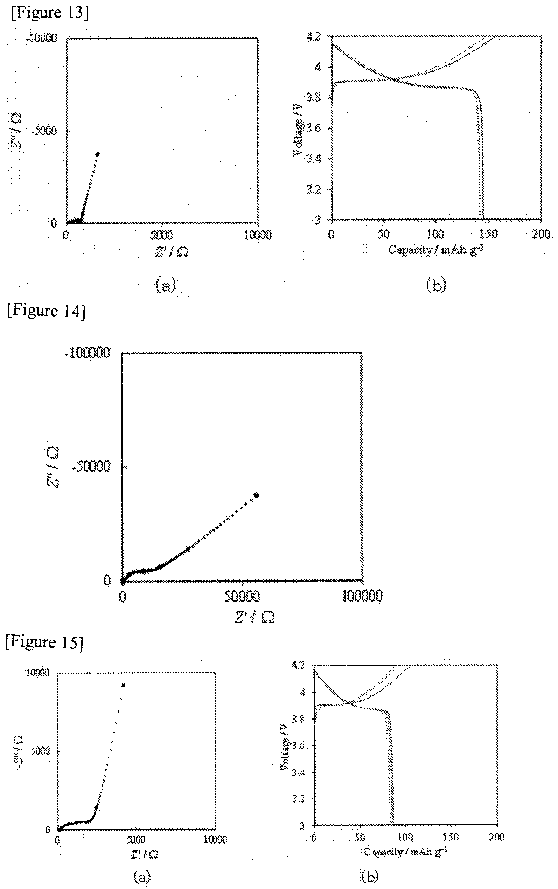

   Fig. 13(a) is a chart illustrating measurement results of impedance of an electrode obtained in Working example 5, and
   Fig. 13(b) is a chart illustrating charge/discharge measurement results.
[Fig. 14]
   Fig. 14 is a chart illustrating a measurement result of impedance of an electrode obtained in Example 1, which is a reference example.
[Fig. 15]
   Fig. 15(a) is a chart illustrating a measurement result of impedance of an electrode obtained in Example 2, which is a reference example, and Fig. 15(b) is a chart illustrating charge/discharge measurement results.
[Fig. 16]

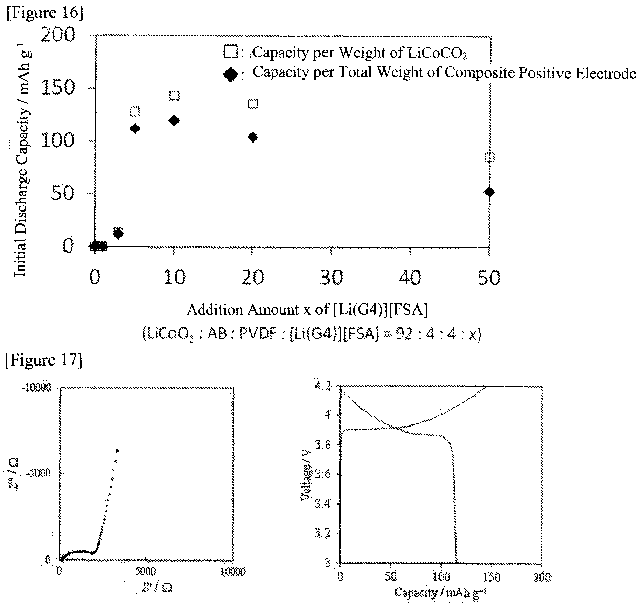

   Fig. 16(a) is a chart illustrating charge/discharge measurement results of electrodes obtained in Examples 4 to 6, which are reference examples, and in Working examples 1 to 3.
[Fig. 17]
   Fig. 17(a) is a chart illustrating a measurement result of impedance of an electrode obtained in Reference example 3, and
   Fig. 17(b) is a chart illustrating charge/discharge measurement results.

### [Description of Embodiments]

Next, the present invention will be explained in further detail.

### [Electrode composition]

The electrode composition for the secondary batteries of the present invention contains an active material, a binder and an ion-conductive material.

The ion-conductive material is a solvated ion-conductive material or an ion-conductive solution containing a metal ion compound.

A detailed explanation follows next.

### <Active material>

The electrode composition of the present invention can be used both as a composition for positive electrodes and as a composition for negative electrodes. Accordingly, either a positive electrode active material or a negative electrode active material can be used as the active material.

Examples of the positive electrode active material include oxide materials, for example, lithium complex oxides such as LiCoO₂, LiNiO₂, LiMnO₂, LiFeO₂, LiC_{O2}O₄, LiNi₂O₄, LiMn₂O₄, LiFe₂O₄, and ternary systems (Ni-Mn-Co, Ni-Co-Al, and the like), as well as LiCoPO₄, LiMnPO₄, LiFePO₄, Li₂FePO₄F, LiVPO₄F, Li₂FeSiO₄, Li₂MnSiO₄, LiFeBO₃, LiMnBO₃, sulfur, V₂O₅, MgO₂, and the like.

Examples of the negative electrode active material include materials containing carbon, lithium titanate (Li₄Ti₅O₁₂), silicon, tin, aluminum, titanium, germanium, or iron. Examples include graphite, hard carbon, silicon, silicon oxide, silicon carbide, tin compounds, alloys of silicon and aluminum, alloys of silicon and tin, alloys of silicon and titanium, alloys of aluminum and tin, and alloys of tin and titanium.

The average particle size of the active material is not particularly limited, but is preferably 0.05 to 10 µm in terms of formation of a positive electrode layer by coating, and more preferably 0.1 to 3 µm in view of dispersibility for the purpose of slurry preparation.

The average particle size can be measured as described below.

Measurement using a scanning electron microscope: particle size is measured on the basis of particle images captured using a scanning electron microscope, and an average value is calculated.

Measurement using a particle size measuring device: particle size is measured using laser light, for example by a dynamic light scattering method or laser diffraction method.

### <Binder>

The binder is not particularly limited, and includes, for example, the polymer compounds below. Preferred among these are polymer compounds that are stable with respect to metallic lithium, other than PTFE, and more preferably polymer compounds that exhibit not very good compatibility with the above active material. Preferred examples of such polymer compounds include polytetrafluoroethylene (PTFE), polyvinylidene difluoride (PVDF), carboxymethyl cellulose (CMC), styrene-butadiene rubber (SBR), acrylic polymers, and polyimides. These polymer compounds are preferred in that only the outermost surface reacts with metallic lithium, but the reaction does not reach any further and terminates just at the outermost surface.

The weight-average molecular weight of the binder is preferably 1,000 to 1,000,000, and the degree of dispersion of the binder is preferably 10% to 50%.

### <Ion-conductive material>

The ion-conductive material is a solvated ion-conductive material or an ion-conductive solution containing a metal ion compound.

### • Solvated ion-conductive material

Examples of the solvated ion-conductive material include solvent, gelatious products, liquid and gas obtained by mixing solute such as gas with the metal ion compound. A preferable solvated ion-conductive material is a solvated ion-conductive liquid in which the solvent evaporates when a complex formation state breaks down.

Examples of the solvent that makes up the solvated ion-conductive liquid as the solvated ion-conductive material include, triglyme (G3) and tetraglyme (G4), represented by the chemical formulae below, as well as pentaglyme (G5).

Examples of the metal in the metal ion compound include lithium, magnesium, and sodium. Examples of the metal ion compound include LiN(SO₂CF₃)₂ (alternative name: "LiTFSA") represented by the chemical formula below, LiN(SO₂F)₂ (alternative name: "LiFSA"), Mg(N(SO₂CF₃)₂)₂ (alternative name: "Mg(TFSA)₂"), NaN(SO₂CF₃)₂ (alternative name: "NaTFSA"), NaPF₆, and the like.

A preferred solvated ion-conductive liquid as the above solvated ion-conductive material is an ionic liquid that contains a salt, and a solvent that coordinates strongly with the cation or anion that make up the salt, as in the chemical formulae given below. Examples include [Li(G3)][TFSA] (a mixture of G3 and LiTFSA will be indicated in this way; the same applies hereinafter), [Li(G4)][TFSA], [Li(G3)][FSA], [Li(G4)][FSA], [Mg(G3)₂][TFSA], [Na(G5)] [TFSA], and the like. Preferably, the solvent and the ion compound in the solvated ion-conductive liquid are combined equimolarly.

### [C1]

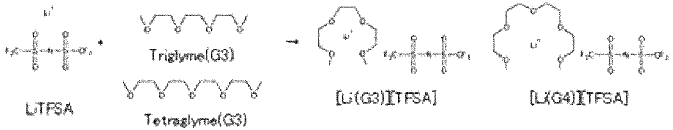

The above solvated ion solutions have a nature similar to that of ionic liquids, and are advantageous in that, for example, the oxidation stability of the solvent such as a glyme increases by virtue of the electric field effect of Li⁺, and in that the performance from the weakly coordinated constituent ions is brought about and unique electrode reactions derived from low solvent activity is shown.

### • Ion-conductive solution

In the ion-conductive solution, a solvent and an ion form a complex. Examples of the solvent that can be used herein include aprotic organic solvents and ionic liquids. Examples of the aprotic organic solvent include N-methylpyrrolidone, ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), acetonitrile (AN), dimethyl sulfoxide (DMSO), tetrahydrofuran (THF), diethyl ether, 1,2-dimethoxyethane, and methyl sulfolane. The foregoing can be used as a single solvent or as mixed solvents of two or more of these.

Examples of cationic species of ionic liquids include imidazolium-based ionic liquids (1-ethyl-3-methyl imidazolium (EMI⁺), 1-butyl-3-methyl imidazolium (BMI⁺), 1,2-dimethyl-3-propyl imidazolium (DMPI⁺), and the like); ammonium-based ionic liquids (N-butyl-N,N,N-trimethyl ammonium ([N₁₁₁₄]⁺), N,N,N,N-tetraethyl ammonium ([N₂₂₂₂]⁺), N,N,N,N-tetrabutyl ammonium ([N_{4444]}⁺), and the like); pyridinium-based ionic liquids (butyl pyridinium (BP⁺), 1-butyl-3-methyl pyridinium and the like); pyrrolidinium-based ionic liquids (1-butyl-1-methyl pyrrolidinium (BMP⁺), 1-ethyl-1-methyl pyrrolidinium, and the like); piperidinium-based ionic liquids (1-methyl-1-propyl piperidinium (PP13⁺), and the like); phosphonium-based ionic liquids (tetrabutyl phosphonium and tributyl dodecyl phosphonium); and morpholinium-based ionic liquids (4-(2-ethoxyethyl)-4-methyl-morpholinium, and the like). Examples of anionic species of ionic liquids include PF₆⁻, BF₄⁻, AsF₆⁻, CH₃COO⁻, CH₃SO₃⁻, N(CN)₂⁻, NO₃⁻, ClO₄⁻, Cl⁻, Br⁻, I⁻, trifluoromethyl sulfonate ([TfO]⁻), trifluoroacetate ([TFA]⁻), (SO₂F)₂N (FSA⁻) and (SO₂CF₃)₂N⁻ (TFSA⁻). These ionic liquids can be used in the form of a single solvent or in the form of mixed solvents of two or more of these.

Examples of ion compounds as ion sources include LiPF₆, LiBF₄, LiAsF₆, LiClO₄, LiCl, LiF, LiTFSA, LiFSA, and LiCF₃SO₃. The molar concentration of the ion compound with respect to the solvent is 0.5 to 5 mol/L, preferably 1 to 2 mol/L.

The ion-conductive solutions are illustrated as the concrete examples.

Examples of solutions in which an aprotic organic solvent is utilized include: ion-conductive solutions in which LiPF₆ at a concentration of 1 mol/L is dissolved in an aprotic organic solvent, specifically in (a PC single solvent, a mixed solvent of EC and DEC (three types can be used with mixing ratios of EC and DEC of 1:1, 1:2 or 3:7 in terms of volume ratio), a mixed solvent of EC and EMC (two types can be used with mixing ratios of EC and EMC of 1:1 or 3:7 in terms of volume ratio), or a mixed solvent of EC and PC (two types can be used with mixing ratios of EC and PC of 1:1 or 3:7 in terms of volume ratio), a mixed solvent of EC, DMC and DEC (mixing ratio of EC, DMC, and DEC of 1:1:1 in terms of volume ratio) or a mixed solvent of EC, PC, and EMC (mixing ratio of EC, PC, and EMC of 1:1:1 in terms of volume ratio));
an ion-conductive solution in which LiBF₄ at a concentration of 1 mol/L is dissolved in an aprotic organic solvent, specifically in (a PC single solvent or a mixed solvent of EC and DEC (mixing ratio of EC:DEC of 1:1 in terms of volume ratio), a mixed solvent of EC and DMC (mixing ratio of EC and DMC of 1:1 in terms of volume ratio), a mixed solvent of EC and EMC (mixing ratio of EC and EMC of 1:3 in terms of volume ratio), or a mixed solvent of EC and PC (mixing ratio of EC and PC of 1:1 in terms of volume ratio));
an ion-conductive solution in which LiCF₃SO₃ at a concentration of 1 mol/L is dissolved in an aprotic organic solvent, specifically in a (PC single solvent or a mixed solvent of EC and DEC (mixing ratio of EC and DEC of 1:1 in terms of volume ratio);
an ion-conductive solution in which LiTFSA at a concentration of 1 mol/L is dissolved in an aprotic organic solvent, specifically in a (PC single solvent or a mixed solvent of EC and DEC (mixing ratio of EC and DEC of 1:1 in terms of volume ratio), a mixed solvent of EC and DMC (mixing ratio of EC and DMC of 1:1 in terms of volume ratio), a mixed solvent of EC and DMC (mixing ratio of EC and DMC of 1:1 in terms of volume ratio), or a mixed solvent of EC and EMC (mixing ratio of EC and EMC of 3:7 in terms of volume ratio)); or
an ion-conductive solution in which LiTFSA at a concentration of 2 mol/L is dissolved in an aprotic organic solvent, specifically in (a mixed solvent of EC and DMC (mixing ratio of EC and DMC of 1:1 in terms of volume ratio)).

Examples of solutions in which an ionic liquid is used include ion-conductive solutions containing an ionic liquid with LiTFSA at a concentration of 1 mol/L, specifically an ionic liquid being a combination of anions and cations and an ion source, such as BMI⁺/TFSA⁻, BMP⁺/TFSA⁻, BMP⁺/BF₄⁻, BMP⁺/PF₆⁻, EMI⁺/Cl⁻, PP13⁺/TFSA⁻, and N₁₁₁₄/TFSA⁻ (molar ratio: 1/1) .

### <Other components>

In addition to the above-described electrode components, components that are commonly used in this type of electrode compositions, for example, a conductive aid, can be used as appropriate in the electrode composition of the present invention. Conductive carbon black such as acetylene black, Ketjen black, carbon nanofibers, carbon nanotubes, or graphite can preferably be used as the conductive aid.

### <Mixing ratios>

The mixing ratio of the ion-conductive material with respect to the active material is preferably active material:ion-conductive material = 1:0.01 to 1:0.3, more preferably 1:0.04 to 1:0.25 in terms of weight ratio.

When the mixing ratio of the ion-conductive material is lower than 0.01, sufficient ion transfer paths may fail to be formed, while a proportion exceeds 0.3 makes solidification of the electrode difficult due to liquefaction of a below-described composite material. Therefore, the mixing ratio of the ion-conductive material lies preferably within the above range.

A volume ratio obtained by converting the mixing ratio of the ion-conductive material with respect to the active material is also important in view of sufficiently bringing out battery characteristics. Herein a volume ratio (volume ratio of the foregoing) is preferably active material:ion-conductive material = 1:0.02 to 1:2.0, more preferably 1:0.1 to 1:1.3.

The mixing ratio of the binder with respect to the active material is preferably active material:binder = 1:0.01 to 0.1, more preferably 1:0.03 to 0.07 in terms of weight ratio.

The mixing ratio of the conductive aid with respect to the active material is preferably active material:conductive aid = 1:0.01 to 0.1, more preferably 1:0.03 to 0.07 in terms of weight ratio.

Preferably the mixing ratios above lie within the above ranges, since otherwise desired effects cannot be achieved.

The electrode composition of the present invention can be used, for example, in a below-described electrode of the present invention.

### [Electrode]

The electrode of the present invention is a positive electrode or negative electrode, and contains an active material, a conductive aid, and with a composite material resulting from compositing a binder and an ion-conductive material. Specifically, the electrode of the present invention is a positive electrode in a case where a positive electrode active material is used as the active material, and is a negative electrode in a case where a negative electrode active material is used as the active material.

The active material, the conductive aid, the binder and the ion-conductive material are identical to those explained above relating to the electrode composition, and hence will not be explained again. That is, the electrode of the present invention is preferably obtained from the above-described electrode composition of the present invention.

An electrode of the present embodiment will be explained next with reference to Fig. 1.

As illustrated in Fig. 1, an electrode 1 of the present embodiment is made up of an active material 10, and of a composite material 20 positioned between particles of the active material 10.

In the present embodiment, the composite material 20 results from compositing of an ion-conductive material, a binder and a conductive aid. Although the composite material 20 does not change chemically, the physical properties of the composite material 20 are altered depending on the physical properties exhibited by each of the constituent components. On account of interactions of the ion-conductive material, the binder, and the conductive aid, the composite material 20 exhibits herein physical properties (changes in physical properties) that are unique to the composite material, and not physical properties of the respective single components. By virtue of the presence of such a composite material, the electrode exhibits higher ion conductivity than that derived from simply having an ion-conductive material, and thus also the electrochemical characteristics of the electrode are enhanced as a result.

In a differential scanning calorimeter (DSC), for example, a melting point peak derived from the ion-conductive material present in the electrode disappears. Specifically, a melting point peak derived from the ion-conductive material present in the electrode of the invention disappears in a differential scanning calorimeter (DSC).

The reasons whereby physical properties change thus upon formation of a composite material are uncertain, but it is deemed that some morphological change occurs in the ion-conductive material as a result of compositing of the ion-conductive material by being taken up into the binder.

Such morphological changes can be checked, for example, as described below.

Specifically, 20 times the amount of [Li(G4)][FSA] as an ion-conductive material, in terms of weight ratio, are mixed with PVDF as a binder, and the whole is allowed to stand, to observe the manner in which the binder undergoes gelling. As illustrated in Fig. 2, [Li(G4)][FSA] swelled thereupon (portion denoted by A in Fig. 2) as a result of gelling of the binder. This reveals that through addition of the ion-conductive material, the latter becomes composited with the binder, with high affinity to the binder. Such compositing in this manner is deemed to be a factor underlying the melting point peak in the DSC curve.

In the electrode of the present invention, the mixing ratio of the active material and the composite material (in the present embodiment, a composite product of the conductive aid, the binder and the ion-conductive material) is preferably 60 to 95 parts by weight of the active material and 5 to 40 parts by weight of the composite material, for a total of 100 parts by weight, and more preferably 75 to 90 parts by weight of the active material and 10 to 25 parts by weight of the composite material, provided that the total is 100 parts by weight.

The mixing ratio of the ion-conductive material, the binder and the conductive aid in the composite material is preferably ion-conductive material:binder:conductive aid = 1:0.05 to 10:0.05 to 10, more preferably 1:0.1 to 1.0:0.1 to 1.0, in terms of weight ratio.

As illustrated in Fig. 1, the composite material of the electrode of the present embodiment is present, mixed with the active material, over the entire thickness direction of the electrode. The wording "over the entire thickness direction" is to be understood that, in the case of an aggregation of a powdery powder active material, the composite material is present so as to fill up the voids that are present between the active material particles and that are formed throughout the film, and so as to cover at least the outer surface of all the active material particles, whereby the active material particles become linked to each other by way of the composite material. The abundance ratio of the composite material is determined by the mixing ratio and by the particle size of the active material that is used.

The thickness of the electrode of the present embodiment is preferably 10 to 400 µm. The shape is not particularly limited, and the electrode may take on various shapes.

In addition to the above-described components, additive components that are commonly used in this type of electrodes can be used as appropriate in the electrode of the present invention, so long as the desired effect of the present invention is not impaired.

### <Production method>

The method for producing an electrode of the present invention utilizes the above-described electrode composition of the present invention, and includes:
a first mixing step of mixing an active material and a binder, to obtain a first mixture; and
a second mixing step of adding an ion-conductive material to the first mixture, and mixing, to obtain a second mixture.

### (First mixing step)

The first mixing step is a step of mixing the active material and the binder, and is preferably a step of further mixing also in the conductive aid. The mixing method is not particularly limited, and mixing can be accomplished in accordance with various methods. During mixing, the temperature may lie in the range of normal temperature to 60°C, the stirring speed may be set to 400 to 3000 rpm, and the mixing time may be set to 5 to 60 minutes.

### (Second mixing step)

In the second mixing step, an ion-conductive material is added to the first mixture obtained in the first mixing step, and the whole is mixed to yield a second mixture. The mixing method is not particularly limited, and mixing can be accomplished in accordance with various methods. During mixing, the temperature may lie in the range of normal temperature to 60°C, the stirring speed may be set to 400 to 3000 rpm, and the mixing time may be set to 5 to 60 minutes.

### (Other steps)

In the present invention a slurry is ordinarily obtained after performing the above first and second mixing steps; accordingly, a step of shaping the slurry to a predetermined shape and drying a shaped article may be carried out. Further, a solvent can be added to and mixed with the first mixture obtained in the first mixing step, prior to the second mixing step. Examples of the solvent used at that time include the aprotic organic solvents illustrated above.

In addition thereto, other steps that are commonly utilized to produce electrodes can be adopted, so long as the purport of the present invention is not departed from.

### <Effect>

In the case, for example, where the electrode of the present invention is used as a positive electrode, ion conduction paths become formed in the electrode in the present embodiment by the active materials in the electrode 1 and the composite material 20 that is positioned in active materials 10 so as to connect the active material particles, as illustrated in Fig. 1, so that ions are transferred in the direction of the arrows in Fig. 1 and move into the solid electrolyte 200. Both the active material 10 and the composite material 20 exhibit high ion conductivity, and ions can flow throughout the interior of the electrode 1; therefore ion circulation is improved, and ion conduction paths become formed over the entire surface in contact with the surface of the solid electrolyte 200 having high ion conductivity to the solid electrolyte. As a result, high battery characteristics are exhibited.

### <Method of use/battery>

The electrode of the present invention can be used as an electrode in a secondary battery, for example a lithium ion battery, and preferably an all-solid-state battery. Specifically, the battery of the present invention is obtained using the above-described electrode of the present invention as a positive electrode and/or as a negative electrode.

For example, the battery of the present invention is a battery 100 having the configuration illustrated in Fig. 3. Specifically, the battery 100 has a positive electrode 110, a negative electrode 120, and an electrolyte film 130 positioned between them, the battery being used by being connected to various types of device 140. Either one of or both of the positive electrode 110 and the negative electrode 120 of the battery 100 are made up of the above-described electrode of the present invention.

Ordinarily known battery members can be used herein, without particular limitations, as the electrolyte film 130, other battery structures, and other battery constituent members.

### Examples

The present invention will be explained in concrete terms below by way of working examples and comparative examples, but the invention is not meant to be limited to these examples in any way.

### [Working example 1]

First, 92 parts by weight of lithium cobaltate as an active material, 4 parts by weight of acetylene black as a conductive aid, and 4 parts by weight of polyvinylidene difluoride (PVDF; product name "PVDF Powder" by Kishida Chemical Co., Ltd.)) as a binder were charged into a mixer and the whole was mixed at 2000 rpm for 10 minutes at normal temperature (first mixing step) to yield a first mixture.

Then, 24 parts by weight of N-methyl pyrrolidone was added to the obtained mixture, and the mixture was mixed for 10 minutes, followed by addition of 5 parts by weight of [Li(G4)][FSA] as an ion-conductive material with 10 minutes of mixing under the same conditions as in the first mixing step, to yield a slurry for positive electrode formation, as a second mixture (second mixing step).

The obtained slurry for positive electrode formation was applied onto an area having a diameter of 8 mm on a Li_{6.25}Al_{0.25}La₃Zr₂O₁₂ (Al-doped LLZ) solid electrolyte pellet having a diameter of 12 mm, and the pellet was further vacuum-dried at 80°C for 24 hours, to yield a positive electrode having the configuration illustrated in Fig. 1. Fig. 4 illustrates a cross-sectional scanning electron micrograph (SEM) of the obtained positive electrode.

As illustrated in Fig. 4, the positive electrode layer denoted by B in the figure and the Li_{6.25}Al_{0.25}La₃Zr₂O₁₂ (Al-doped LLZ) solid electrolyte layer denoted by C in the figure were laid up on each other. The obtained positive electrode (positive electrode layer illustrated in Fig. 4) had a mass of about 4 mg, i.e. about 3.5 mg when converted to the mass of lithium cobaltate alone. The thickness of the positive electrode layer was about 30 µm. The positive electrode exhibited no flowability.

The battery illustrated in Fig. 3 was constructed using the obtained positive electrode.

Battery characteristics were measured using the obtained battery. For comparison, a positive electrode was produced, and measurements were carried out in the same way except that the ion-conductive material was not used.

### (Battery characteristics)

### • Impedance measurement

Impedance was measured under measurement conditions that included frequency in the range of 0.1 to 3,000,000 Hz, temperature of 60°C and applied voltage of 50 mV, using a high-performance electrochemical measurement system, product name "SP-200", by Bio-Logic SAS (France), as the measurement device. The results are depicted in Fig. 5. The measurement results indicated that the comparison target (line denoted by D in the figure) having no [Li(G4)][FSA] added thereto exhibited an arc of several hundreds of thousands of Ω, drawn on a Nyquist plot, derived from the interface resistance between lithium cobaltate and the Al-doped LLZ solid electrolyte pellet. By contrast, the arc the product of the present invention having [Li(G4)][FSA] added thereto (line denoted by E in the figure) was about 800 Ω, indicative of the significant drop in interface resistance elicited through addition of [Li(G4)][FSA].

### • Charge/discharge measurement

A charge/discharge measurement was performed under set conditions that included constant current measurement with current of 10 µA (current density 20 µA/cm²), cut-off voltage of 3.0 to 4.2 V, and temperature of 60°C, using a battery charge/discharge device, product name "HJ Series (HJ1001SD8)", by Hokuto Denko Corporation, as the measuring device. The results are depicted in Fig. 6.

As a result of the measurement, a cut-off voltage of 4.2 V was reached in several seconds after start of charging, and charging could not be carried out, in the comparison target having no [Li(G4)][FSA] added thereto and depicted in Fig. 6(a). Discharge as well was therefore not possible. In the product of the present invention having [Li(G4)][FSA] added thereto and depicted in Fig. 6(b), by contrast, a drawn initial charge curve exhibited a plateau. The initial charge capacity was about 150 mAh/g. A subsequent initial discharge curve reached a plateau, exhibiting an initial discharge capacity of 125 mAh/g. Although from the second cycle onwards capacity dropped with respect to that in the initial cycle, charge/discharge could be carried out without problems.

### • DSC measurement

### [Differential scanning calorimeter (DSC) measurement]

A melting point peak of the [Li(G4)][FSA] present in the electrode was checked, to assess the manner in which the [Li(G4)][FSA] was present in the electrode.

The measurement was performed using product name "DSC-60", by Shimadzu Corporation, as a differential scanning calorimeter. The measurement temperature range was -50°C to about 100°C, and the heating rate during the measurement was set to 5°C/minute. The results are depicted in Fig. 7. The results revealed that no peak derived from the melting point of [Li(G4)][FSA] can be observed. This indicates that in the electrode of the present invention [Li(G4)][FSA] is not present as-is, but is present in the form of an active material, a conductive aid, and a composite material resulting from compositing of a binder and an ion-conductive material.

### [Working example 2]

A positive electrode was obtained and battery characteristics were measured in the same way as in Working example 1, except that the addition amount of [Li(G4)][FSA] is set to 10 parts by weight. The composition of the electrode was LiCoO₂:AB:PVDF: [Li(G4)] [FSA] = 92:4:4:10 (weight ratio). The results are depicted in Fig. 8. As the results in Fig. 8 reveal, it was found that battery characteristics were excellent, similar to those of the electrode obtained in Working example 1.

### [Working example 3]

A positive electrode was obtained and battery characteristics were measured in the same way as in Working example 1, except that the addition amount of [Li(G4)][FSA] is modified to 20 parts by weight. The composition of the electrode was LiCoO₂:AB:PVDF: [Li(G4)] [FSA] = 92:4:4:20 (weight ratio). The results are depicted in Fig. 9. As the results in Fig. 9 reveal, it was found that battery characteristics were excellent, similar to those of the electrode obtained in Working example 1.

### [Working example 4]

A positive electrode was obtained and battery characteristics were measured in the same way as in Working example 1, except that [Li(G3)][FSA] is used instead of [Li(G4)][FSA]. The composition of the electrode was LiCoO₂:AB:PVDF:[Li(G3)][FSA] = 92:4:4:5 (weight ratio). The results are depicted in Fig. 10. As the results in Fig. 10 reveal, it was found that battery characteristics were excellent, similar to those of the electrode obtained in Working example 1.

### [Working example 5]

A positive electrode was obtained and battery characteristics were measured in the same way as in Working example 1, but using herein 1 mol dm⁻³ LiTFSA/EMI-TFSA instead of [Li(G4)][FSA]. The electrode composition was LiCoO₂:AB:PVDF:1 mol dm⁻³ LiTFSA/EMI-TFSA = 92:4:4:5 (weight ratio). The results are depicted in Fig. 11. The battery characteristics observed were excellent, as the results in Fig. 11 reveal.

For the purpose of obtaining yet higher charge/discharge capacity, positive electrodes were obtained and potential characteristics were measured similarly, but setting herein mixing ratios of LiCoO₂:AB:PVDF:1 mol dm⁻³ LiTFSA/EMI-TFSA (electrolyte solution) = 92:4:4:10 (weight ratio) and LiCoO₂:AB:PVDF:1 mol dm⁻³ LiTFSA/EMI-TFSA = 92:4:4:20 (weight ratio). Fig. 12 illustrates the positive electrode with the electrolyte solution mixing ratio of 10, and Fig. 13 the positive electrode with the electrolyte solution mixing ratio of 20. It is found that an increase in the addition amount of the electrolyte solution translates into higher discharge capacity, and in particular in higher characteristics as a positive electrode of a battery.

The term "1 mol dm⁻³ LiTFSA/EMI-TFSA" denotes herein an electrolyte solution of 1 mol dm⁻³ of LiTFSA dissolved in EMI-TFSA (1-ethyl-3-methyl imidazolium bis(trifluoromethanesulfonyl)imide.

### [Reference example 1]

Positive electrodes were obtained and battery characteristics were measured in the same way as in Working example 1, except that the mixing ratios of active material and ion-conductive material (electrolyte solution) were as given below.
Example 1: active material (LiCoO₂):ion-conductive material [Li(G4)][FSA] = 1:0.0054
Example 2: active material (LiCoO₂):ion-conductive material [Li(G4)][FSA] = 1:0.54

Impedance and charge/discharge were measured in the same way as in Working example 1, but charge/discharge were not possible. Fig. 14 illustrates the impedance measurement results (results before charge/discharge; 60°C, 1000 Hz) in Example 1. As Fig. 14 shows, some interface formation effect was elicited, but charge/discharge failed, and thus the positive electrodes could not be used as positive electrodes for secondary batteries.

In Example 2 as well, impedance was measured in the same way as in Working example 1 (result before charge/discharge; 60°C, 1000 Hz), with charge/discharge results (60°C, 10 µA). The results are depicted in Fig. 15. As Fig. 15(b) reveals, capacity was significantly lower than that in Working example 1, despite the fact the same ion-conductive material of Working example 1 was used herein. This indicates that battery characteristics worsen in a case where the mixing ratio of the above-described ion-conductive material is exceeded.

The reason for the drop in charge/discharge capacity in Example 2 is unclear, but it is deemed that given that the volume% of the liquid ion-conductive material [Li(G4)][FSA] is as high as 63%, particles of acetylene black and/or LiCoO₂ become dispersed in [Li(G4)][FSA], and cannot contribute to charge and discharge, which results in a drop in capacity. It is thus found that a higher mixing ratio of the ion-conductive material entails a drop in capacity.

### [Reference example 2]

Positive electrodes were obtained in the same way as in Working examples 1 to 3, but with the mixing ratios given below, and charge/discharge capacity was measured in the same way as in Working example 1. The results are depicted in Fig. 16.

LiCoO₂:acetylene black:PVDF:[Li(G4)][FSA]
= 92:4:4:1 (Example 4)
= 92:4:4:3 (Example 5)
= 92:4:4:5 (Working example 1)
= 92:4:4:10 (Working example 2)
= 92:4:4:20 (Working example 3)
= 92:4:4:50 (Example 6)

As the results in Fig. 16 reveal, composition ratios are important herein. It is found that sufficient battery characteristics cannot be obtained when deviating from preferred ranges, as in the case of Examples 4 to 6.

The white squares □ in Fig. 16 denote specific capacity (mAh/g units) obtained by dividing the measured discharge capacity (mAh units) by the weight (g units) of LiCoO₂ alone (weight without the binder, the conductive aid, and the ion-conductive material). The degree of efficiency with which the active material (LiCoO₂) is utilized can be recognized on the basis of the specific capacity. The results are depicted in Fig. 16, for evaluation as compared with the theoretical capacity (137 mAh/g) of LiCoO₂.

Meanwhile, the black squares ◆ denote specific capacity (mAh/g units) obtained by dividing the measured discharge capacity (mAh units) by the total amount (g units) of LiCoO₂, binder, conductive aid plus ion-conductive material. This specific capacity allows recognizing the specific capacity of the totality of materials that make up the positive electrode in an actual battery.

As Fig. 16 illustrates, there was no change in a trend of increase or decrease in specific capacity with respect to the addition amount of the ion-conductive material, both for □ and ◆; the specific capacity of the positive electrode material in an actual battery exhibits thus sufficiently high performance as required.

### [Reference example 3]

A positive electrode was obtained in the same way as in Working example 1, but with the mixing ratios given below, and impedance and charge/discharge were measured in the same way as in Working example 1. The results are depicted in Fig. 17. • LiCoO₂:acetylene black:PVDF:[Li(G4)][FSA] = 92:4:4:35 (Example 4) [active material (LiCoO₂) :ion-conductive material [Li(G4)][FSA] = 1:0.38]

As made clear in the results of Fig. 17(a) and Fig. 17(b), interface formation ability was observed, but discharge capacity was insufficient, and effects were worse than those of Working example 1 and so forth.

## Claims

1. An electrode composition for a secondary battery comprising:
an active material; a binder; and an ion-conductive material,
wherein said ion-conductive material is a solvated ion-conductive material or an ion-conductive solution containing a metal ion compound.

2. The electrode composition for the secondary battery according to Claim 1,
wherein a mixing ratio of the ion-conductive material with respect to the active material is
active material:ion-conductive material = 1:0.01 to 1:0.3 in terms of weight ratio.

3. An electrode comprising: an active material, a conductive aid, and a composite material resulting from compositing a binder and an ion-conductive material.

4. The electrode according to Claim 3, wherein said composite material is present over the entirety of a thickness direction of the electrode, in a state of being mixed with the active material and the conductive aid.

5. A method for producing an electrode using the electrode composition of Claim 1, the method including:
a first mixing step of mixing an active material and a binder, to obtain a first mixture; and
a second mixing step of adding an ion-conductive material to the first mixture, and mixing, to obtain a second mixture.

6. A battery, provided with the electrode of Claim 3 or Claim 4 as at least one of a positive electrode and a negative electrode.
